# EUROPÄISCHE PATENTSCHRIFT

(11) **EP 1 303 549 B1**
(45) Veröffentlichungstag und Bekanntmachung des Hinweises auf die Patenterteilung: **06.10.2004**
(21) Anmeldenummer: 01969427.2
(22) Anmeldetag: 18.07.2001
(51) Int. Cl.: C08F 220/14, C08F 220/18, C08F 220/28

(54) **TEILVERZWEIGTE POLYMERE**
PARTIALLY BRANCHED POLYMERS
POLYMERES PARTIELLEMENT RAMIFIES

(30) Priorität: 19.07.2000 DE 10035119
(43) Veröffentlichungstag der Anmeldung: 23.04.2003
(73) Patentinhaber: BASF AKTIENGESELLSCHAFT, 67056 Ludwigshafen (DE)
(72) Erfinder: BINDER, Horst, 68623 Lampertheim (DE); BRUCHMANN, Bernd, 67251 Freinsheim (DE)
(74) Vertreter: Pohl, Michael, Dr.
(86) Internationale Anmeldenummer: PCT/EP2001/008326
(87) Internationale Veröffentlichungsnummer: WO 2002/006363

(56) Entgegenhaltungen:
- EP-A- 0 693 507
- WO-A-99/07754
- DE-A- 4 203 277
- US-A- 4 880 867
- US-A- 5 442 023

## Beschreibung

Die vorliegende Erfindung betrifft teilverzweigte Polymere mit einem zahlenmittleren Molekulargewicht Mₙ im Bereich von 500 bis 20000 Dalton.

Niedermolekulare Polymere, d. h. Polymere mit zahlenmittleren Molekulargewichten von maximal 20000 Dalton, sind für eine Vielzahl von Anwendungen von Interesse, beispielsweise zur Herstellung von Überzugsmitteln auf dem Lackgebiet, zur Herstellung von Papierbeschichtungsmitteln, Druckfarben, Klebstoffen und Bodenpflegemitteln. Häufig werden sie als Cobindemittel oder Hilfsstoffe in den vorgenannten Anwendungen eingesetzt. Außerdem finden niedermolekulare Polymere Anwendung als industrielle Wachse sowie als Additive für Kraftstoffe und Öle, sei es als Detergenzien oder als Verdicker. Ein wichtiger Vorteil niedermolekularer Polymere gegenüber ihren höhermolekularen Homologen ist die geringere Viskosität dieser Polymere und ihrer Lösungen, was bei der Verarbeitung in der Regel einen geringeren Lösungsmittelaufwand zur Folge hat.

Eine wichtige Klasse niedermolekularer Polymere sind sogenannte funktionalisierte Polymere, die mehrere reaktive funktionelle Gruppen im Polymer enthalten. Unter reaktiven funktionellen Gruppen versteht man dabei solche funktionellen Gruppen, die bei Raumtemperatur oder unter Erwärmen mit anderen funktionellen Gruppen zur Bindungsbildung befähigt sind. Sie werden daher als Bausteine bei der Herstellung höhermolekularer Polymere eingesetzt. Beispielsweise verwendet man niedermolekulare Polymere, die mit Hydroxylgruppen funktionalisiert sind, als Bausteine bei der Herstellung von Polyurethanen und Polyestern. Außerdem werden funktionalisierte Polymere als Reaktiv-Komponente in thermisch härtbaren Beschichtungsmitteln sowie beim Reaktionsspritzguss-Verfahren (RIM) eingesetzt.

Aus der US 5,534,598 sind niedermolekulare Acrylatpolymere bekannt, die von Allylalkoholen und propoxylierten Allylalkoholen abgeleitet sind und somit OH-Gruppen als funktionelle Gruppen aufweisen. Aus der US 4,117,235 und der DE 42 03 277 sind Verfahren zur Herstellung niedermolekularer Polymere bekannt, die reaktive funktionelle Gruppen aufweisen können.

Die aus dem Stand der Technik bekannten niedermolekularen Polymere auf Basis ethylenisch ungesättigter Monomere weisen in der Regel eine lineare Struktur auf, da zu ihrer Herstellung ausschließlich monoethylenisch ungesättigte Monomere eingesetzt werden. Mehrfach ethylenisch ungesättigte Monomere wurden für die Herstellung derartiger niedermolekularer Polymere bislang nicht eingesetzt, da sie zu einem raschen Molekulargewichtsaufbau und im Extremfall zur Ausbildung eines hochmolekularen dreidimensionalen Netzwerks führen.

So beschreibt beispielsweise die DE 36 30 187 Copolymere auf Basis von 70 bis 99,5 Gew.-% Diethylenglykolmonomethacrylat und 0,5 bis 30 Gew.-% Estern und/oder Amiden der Acrylsäure oder der Methacrylsäure, die 0,1 bis 2 Gew.-% eines vernetzenden bifunktionellen Monomeren einpolymerisiert enthalten. Die durch Polymerisation bei niedrigen Temperaturen, z. B. 60 °C, erhaltenen Polymere sind hochmolekulare Netzwerke, was im zusammenspiel mit der hydrophilen Monomerbasis eine hohe Quellbarkeit der Polymere durch Wasser zur Folge hat.

Es wurde nunmehr überraschenderweise gefunden, dass man durch gezielte Copolymerisation ethylenisch ungesättigter Monomere, die bis zu 20 Gew.-% solcher Monomere mit wenigstens zwei, nichtkonjugierten ethylenisch ungesättigten Doppelbindungen umfassen, niedermolekulare Polymere hergestellt werden können, die zumindest teilweise in den Polymerketten eine oder mehrere Verzweigungsstellen aufweisen (teilverzweigte Polymere).

Demnach betrifft die vorliegende Erfindung ein Verfahren zur Herstellung teilverzweigter Polymere mit einem zahlenmittleren Molekulargewicht Mₙ im Bereich von 500 bis 10000 Dalton, das aus ethylenisch ungesättigten Monomeren aufgebaut ist, die
i) 80 bis 99,9 Gew.-% und vorzugsweise 90 bis 99 Gew.-% monoethylenisch ungesättigte Monomere A und
ii') 0,1 bis 20 Gew.-% und vorzugsweise 1 bis 10 Gew.-% Monomere B, die wenigstens zwei nichtkonjugierte, ethylenisch ungesättigte Doppelbindungen aufweisen,
umfassen, wobei der Gewichtsanteil der Monomere A und B auf die Gesamtmenge der das Polymer konstituierenden ethylenisch ungesättigten Monomere bezogen ist, durch radikalische Copplymerisation der Monomere A und B in Gegenwart von 1 bis 6 Gew.-%, bezogen auf das Gesamtgewicht der Monomere A und B, wenigstens eines Polymerisationsinitiators in Substanz oder in Lösung bei Temperaturen im Bereich von 170 °C bis 250 °C.

Die hier und im Folgenden angegebenen Molekulargewichte Mₙ sind zahlenmittlere Molekulargewichte, wie sie beispielsweise durch Ausnutzung der kolligativen Eigenschaften der Polymere, z. B. durch Dampfdruck- oder Membranosmose, durch Ebullioskopie, Kryoskopie oder durch Gelpermeationschromatographie bestimmt werden können. Die hier angegebenen Werte für Mₙ wurden mittels Gelpermeationschromatographie (GPC) bestimmt, wobei Polystyrol als Standard verwendet wurde. Das verwendete Verfahren ist beispielsweise in der DIN 55672-1 beschrieben.

Die erfindungsgemäß erhaltenen Polymere weisen vorzugsweise ein zahlenmittleres Molekulargewicht Mₙ im Bereich von 700 bis 10000 Dalton und insbesondere im Bereich von 1000 bis 6000 Dalton auf.

Die im erfindungsgemäßen Verfahren eingesetzten monoethylenisch ungesättigten Monomere A umfassen solche Verbindungen, die eine ethylenisch ungesättigte, polymerisierbare Doppelbindung aufweisen. Vorzugsweise weisen wenigstens 60 Gew.-% und insbesondere wenigstens 80 Gew.-% der Monomere A eine polymierisierbare Doppelbindung in Form einer Acryl- oder einer Methacrylgruppe auf.

Eine bevorzugte Ausführungsform des erfindungsgemäßen Verfahrens betrifft die Herstellung von Polymeren , die eine Reaktivgruppe aufweisen. Unter Reaktivgruppen versteht man funktionelle Gruppen, die sich für Vernetzungsreaktionen, sei es bei Raumtemperatur oder bei erhöhter Temperatur, eignen. Hierzu zählen Carboxyl-, Keton-, Aldehyd-, Isocyanat-, Amino- und insbesondere Hydroxyl- und Epoxygruppen. Monomere mit reaktiven funktionellen Gruppen werden daher im Folgenden als Monomere A1 und solche ohne reaktive funktionelle Gruppen als Monomere A2 bezeichnet. In dieser bevorzugten Ausführungsform der vorliegenden Erfindung beträgt der Anteil der Monomere A1 an der Gesamtmenge der Monomere in der Regel 10 bis 80 Gew.-% und vorzugsweise 20 bis 70 Gew.-%.

Bevorzugte Monomere A1 sind Ester der Acrylsäure und der Methacrylsäure, die OH-Gruppen oder Oxiran-Gruppen aufweisen. Beispiele für OH-Gruppen tragende Ester der Acrylsäure bzw. der Methacrylsäure sind die C₁-C₈-Aydroxyalkyl(meth)acrylate wie 2-Hydroxyethylacrylat, 2- oder 3-Hydroxypropylacrylat, 2-Hydroxybutylacrylat, 4-Hydroxybutylacrylat, 6-Hydroxyhexylacrylat sowie die entsprechenden Methacrylate. Beispiele für Oxiran-Gruppen tragende Ester der Acrylsäure und der Methacrylsäure sind Glycidylacrylat, Glycidylmethacrylat, 2,3-Epoxycyclohexyl- oder 3,4-Epoxycyclohexylacrylat oder -methacrylat. Beispiele für Monomere mit Carboxylgruppe sind Acrylsäure und Methacrylsäure sowie weiterhin Fumarsäure, Maleinsäure und die Halbester dieser Säuren mit C₁-C₈-Alkanolen. Beispiele für Aminogruppen aufweisende Monomere A1 sind 2-Aminoethylacrylamid, 2-Aminoethylmethacrylamid, 2-Aminoethylacrylat und -methacrylat sowie die entsprechenden Mono- und Di-C₁-C₄-alkylaminoverbindungen.

Beispiele für die bevorzugten Monomere A2 sind die C₁-C₂₀-Alkylacrylate und -methacrylate, die C₅-C₁₀-Cycloalkylacrylate und - methacrylate, wobei die vorgenannten Verbindungen im Alkylteil bzw. im Cycloalkylteil halogeniert sein können oder anstelle einer CH₂-Gruppe ein oder zwei nicht benachbarte Sauerstoffatome und/oder Iminogruppen aufweisen können.

Hierzu zählen beispielsweise: Methylacrylat, Ethylacrylat, n-Propylacrylat, Isopropylacrylat, n-Butylacrylat, Isobutylacrylat, tert.-Butylacrylat, n-Amylacrylat, Isoamylacrylat, n-Hexylacrylat, 2-Ethylbutylacrylat, 2-Ethylhexylacrylat, 2-Propylheptylacrylat, Laurylacrylat, Stearylacrylat, Cyclopentylacrylat, Cyclohexylacrylat, 3-Methoxybutylacrylat, 2-Methoxybutylacrylat, 2-Ethoxyethylacrylat, Tetrahydrofurylacrylat und die entsprechenden Ester der Methacrylsäure. Geeignete Monomere A2 mit Acryl- oder Methacrylgruppe sind weiterhin Phenylacrylat, Benzylacrylat, Phenethylacrylat, 2-Phenoxyethylacrylat, Acrylamid, Methacrylamid, N-Methylacrylamid, N-Ethylacrylamid, N,N-Dimethylacrylamid, N,N-Diethylacrylamid, N-Phenylacrylamid, Oxazolidinylethylacrylat, Methyl-α-chloracrylat, Methyl-2-cyanoacrylat, 2-Nitro-2-methylpropylacrylat sowie die entsprechenden Methacrylate und Methacrylamide.

Weiterhin kommen als Monomere A2 vinylaromatische Monomere wie Styrol, α-Methylstyrol, tert.-Butylstyrol, Vinyltoluole und Chlorstyrole in Betracht. Weitere Monomere A2 sind außerdem die vinyl- und Allylester aliphatischer Carbonsäuren mit 1 bis 20 C-Atomen wie Vinylacetat, Vinylpropionat, Vinylvalerat, Vinylversatate (Vinylester der Versatic® Säuren), Vinyllaurat und Vinylstearat, weiterhin Vinylhalogenide wie Vinylchlorid und Vinylidenchlorid, Vinylether aliphatischer C₁-C₂₀-Alkohole wie Vinylisobutylether, Vinyldodecylether und Vinyloctadecylether, weiterhin heterocyclische Vinylverbindungen wie Vinylpyrrolidon, Vinylcaprolactam, Vinylimidazol, Vinylpyridine und vergleichbare.

Vorzugsweise beträgt der Anteil der Monomere A2 an der Gesamtmenge der das Polymer konstituierenden Monomere wenigstens 20 Gew.-% und insbesondere wenigstens 30 Gew.-%. In der Regel wird er 99,9 Gew.-%, vorzugsweise 99 Gew.-% nicht überschreiten.

Bei vorliegen von Monomeren A1 wird er insbesondere 90 Gew.-% und besonders bevorzugt 80 Gew.-% nicht überschreiten.

Unter den Monomeren B, die wenigstens zwei nichtkonjugierte Doppelbindungen aufweisen, sind solche Verbindungen bevorzugt, in denen wenigstens eine, vorzugsweise wenigstens zwei und insbesondere alle der Doppelbindungen als Acryl- und/oder Methacrylgruppe vorliegen. Insbesondere sind wenigstens 80 Gew.-% der Monomere B und vorzugsweise alle Monomere B unter solchen Monomeren B ausgewählt, in denen die polymerisierbaren Doppelbindungen als Acrylat- bzw. Methacrylatgruppe vorliegen. Beispiele für derartige Monomere B leiten sich von Di- oder Polyolen ab, die wenigstens zweifach mit Acrylsäure und/oder Methacrylsäure verestert sind. Hierzu zählen 1,2-Ethandioldiacrylat, 1,3-Propandioldiacrylat, 1,4-Butandioldiacrylat, 1,6-Bexandioldiacrylat, Diethylenglykoldiacrylat, Triethylenglykoldiacrylat, Dipropylenglykoldiacrylat und Tripropylenglykoldiacrylat, Trimethylolpropandi- und -triacrylat, Pentaerythrit-Tri- und -tetraacrylat sowie die entsprechenden Methacrylat-Verbindungen.

Weiterhin kommen als Monomere B die Vinyl-, Allyl- und Methallylester ethylenisch ungesättigter Carbonsäuren, insbesondere der Acrylsäure und der Methacrylsäure in Betracht, wie Allyl(meth)acrylat, Methallyl(meth)acrylat, Cyclohexenylacrylat und -methacrylat sowie Dihydrodicyclopentadienylacrylat und - methacrylat, weiterhin die Vinyl-, Allyl- und Methallylether von Polyolen wie Butandioldivinylether, Butandioldiallylether und Trimethylolpropantriallylether. Als weitere Monomere B seien beispielhaft genannt Diallylphthalat, N,N-Divinyl- und N,N-Diallylimidazolinon, N,N-Divinyl- und N,N-Diallylharnstoff sowie Divinylbenzol.

Die Herstellung der erfindungsgemäßen Polymere erfolgt durch radikalische Copolymerisation der Monomere A und B in Gegenwart eines polymerisationsinitiators. Erfindungsgemäß kann die Polymerisation in Substanz oder in Lösungen durchgeführt werden.

Die Polymerisationstemperatur beträgt wenigstens 170 °C und wird 250 °C und insbesondere 220 °C nicht überschreiten.

Als polymerisationsinitiatoren kommen grundsätzlich alle Verbindungen in Betracht, die eine radikalische Polymerisation ethylenisch ungesättigter Monomere auslösen können. Vorzugsweise sind die polymerisationsinitiatoren ausgewählt unter organischen Hydroperoxiden, Azoestern und organischen Peroxiden, wobei letztere besonders bevorzugt sind.

Beispiele für organische Hydroperoxide sind Cumolhydroperoxid, tert.-Amylhydroperoxid, tert.-Butylhydroperoxid, Diisopropylbenzylmonohydroperoxid. Ein Beispiel für Azoester ist 2,2'-Azo-di(2-acetoxy)propan. Bevorzugte organische Peroxide sind solche, in denen die Peroxygruppe an tertiäre C-Atome gebunden ist, wie Dicumylperoxid, tert.-Butylcumylperoxid, Di-tert.-Butylperoxid, Di-tert.-Amylperoxid, 2,5-Dimethyl-2,5-di(tert.-butylperoxy)hexan.

In dem erfindungsgemäßen Verfahren setzt man den Initiator in einer Menge von 1 bis 6 Gew.-% und insbesondere von 2 bis 4 Gew.-%, bezogen auf die zu polymerisierenden Monomere ein. Man kann auch größere Mengen an Polymerisationsinitiator, beispielsweise bis 8 Gew.-%, bezogen auf die zu polymerisierenden Monomere, einsetzen. In der Regel wird man dann bei etwas niedrigeren Temperaturen polymerisieren, die vorzugsweise jedoch eine Temperatur von 150 °C nicht unterschreiten.

Selbstverständlich kann man die Polymerisation auch in Gegenwart von Polymerisationsreglern (Kettenübertragungsmitteln) durchführen. Hierzu zählen Verbindungen mit SH-Gruppen und halogenierte Kohlenwasserstoffe wie Chloroform, Bromoform oder Tetrachlorkohlenstoff. Auch können Alkohole, die im erfindungsgemäßen Verfahren als Lösungsmittel eingesetzt werden können, in geringem Umfang als Kettenregler wirken. Vorzugsweise führt man das erfindungsgemäße Polymerisationsverfahren in Abwesenheit von Kettenreglern, abgesehen von den vorgenannten Alkoholen, durch.

Lösungsmittel werden, sofern vorgesehen, in Mengen bis zu 50 Gew.-%, insbesondere bis 30 Gew.-%, bezogen auf das Gesamtgewicht der Monomeren eingesetzt. Beispiele für geeignete Lösungsmittel sind Alkohole, z. B. n-Propanol, Isopropanol, n-Butanol, Isobutanol, Etheralkohole wie Ethylglykolether, Ethyldiglykolether, Ether wie Ethylenglykoldimethylether, Diethylenglykoldimethylether, Triethylenglykoldimethylether, Ester wie Butylacetat, Ketone wie Methylamylketon, aromatische Alkohole wie Benzylalkohol, Methylbenzylalkohol, Cumolalkohole sowie aromatische und aliphatische Kohlenwasserstoffe wie Toluol, Xylol, Ethylbenzol, Cumol, Diisopropylbenzol, Diphenylmethan, Tetralin oder Dekalin.

Das erfindungsgemäße Verfahren wird in der Regel bei erhöhtem Druck durchgeführt, da die Einsatzstoffe bei den Reaktionstemperaturen flüchtig sind. Praktischerweise arbeitet man unter dem Eigendampfdruck der Polymerisationsmischung bei Reaktionstemperatur.

Die Polymerisation kann kontinuierlich oder diskontinuierlich in den dafür geeigneten Reaktionsgefäßen durchgeführt werden. Geeignete Polymerisationsgefäße für die diskontinuierliche Durchführung der Polymerisation sind übliche Rührkesselreaktoren, die vorzugsweise für das Arbeiten unter Druck ausgelegt sind.

Die diskontinuierliche Durchführung des erfindungsgemäßen Verfahrens kann sowohl als Batch-, als Semi-Batch- oder als Zulaufverfahren ausgestaltet sein. Beim Batch-Verfahren gibt man die zu polymerisierenden Monomere, den Polymerisationsinitiator und gegebenenfalls vorgesehenes Lösungsmittel in den Polymerisationsreaktor und erwärmt diesen auf Polymerisationstemperatur und behält die Polymerisationstemperatur bei bis der gewünschte Umsatz erreicht ist. Beim Semi-Batch-Verfahren legt man in die zu polymerisierenden Monomere einen Teil des Polymerisationsinitiators und gegebenenfalls gewünschtes Lösungsmittel im Polymerisationsreaktor vor, erwärmt diesen auf Polymerisationstemperatur und fügt dann im Verlauf der Polymerisation die Restmenge an Initiator zu.

Beim Zulaufverfahren legt man Lösungsmittel und gegebenenfalls einen Teil der zu polymerisierenden Monomere und gegebenenfalls einen Teil des Polymerisationsinitiators im Polymerisationsgefäß vor, vorzugsweise jedoch nicht mehr als 20 % der zu polymerisierenden Monomere und des erforderlichen Initiators, erwärmt die Mischung auf Polymerisationstemperatur und fügt dann unter Polymerisationsbedingungen die verbleibenden Mengen an Polymerisationsinitiator und der zu polymerisierenden Monomere unter den Polymerisationsbedingungen zu. Die Zugabegeschwindigkeit der zu polymerisierenden Monomere und des Initiators richtet sich naturgemäß nach der Polymerisationsgeschwindigkeit, der freiwerdenden Polymerisationswärme und der Wärmeabfuhr aus dem Polymerisationsgefäß. Die Zulaufdauer liegt in der Regel im Bereich von 10 Minuten bis 4 Stunden und vorzugsweise im Bereich von 30 Minuten bis 2 Stunden. In der Regel schließt sich hieran noch eine Nachpolymerisationsphase zur Vervollständigung des Umsatzes an. Diese kann wenige Minuten, z. B. 10 bis 20 Minuten, bis hin zu 5 h betragen und wird vorzugsweise 2 h nicht überschreiten.

Geeignete Polymerisationsgefäße für die kontinuierliche Durchführung des erfindungsgemäßen Verfahrens sind neben Rührkessel-Reaktoren auch Rohrreaktoren, Schlaufenreaktoren, Ringspalt-Reaktoren, vorzugsweise solche mit einem Ringspalt von 0,5 bis 10 mm Spaltbreite, wie sie beispielsweise in der DE 42 03 277 und der DE 42 03 278 beschrieben werden. Auf diese Druckschriften wird hiermit Bezug genommen. Für die Durchführung des erfindungsgemäßen Verfahrens werden Ringspalt-Reaktoren bevorzugt. Beispiele für geeignete Ringspalt-Reaktoren sind auch solche, in denen die Randbedingungen für eine Taylor-Wirbelströmung erfüllt sind. Derartige Reaktoren sind beispielsweise in der DE-A 198 28 742 beschrieben, auf die hiermit ebenfalls in vollem Umfang Bezug genommen wird.

Zur Durchführung der kontinuierlichen Ausgestaltung des erfindungsgemäßen Verfahrens wird man in der Regel die Einsatzstoffe über getrennte Zuläufe oder vorzugsweise als Mischung aus Initiator, Monomeren und gegebenenfalls Lösungsmittel dem Polymerisationsreaktor zuführen und das entstandene Polymer kontinuierlich entnehmen. Je nach Reaktivität der zu polymerisierenden Monomere, dem gewünschten Polymerisationsumsatz und der Reaktorgeometrie beträgt die mittlere Verweilzeit der zu polymerisierenden Reaktionsmischung im Reaktor eine Minute bis hin zu 2 Stunden und liegt insbesondere im Bereich von 2 Minuten bis 0,5 Stunden.

Hierbei hat es sich bewährt, einen Teil des aus dem Reaktor entnommenen Produktstroms zusammen mit "frischen" Monomeren und Initiator in den Polymerisationsreaktor zurückzuführen. Das Verhältnis von rückgeführtem Produktstrom zu der Menge der frisch zugeführten Monomere + Initiator wird auch als Rückführverhältnis bezeichnet und liegt vorzugsweise im Bereich von 5 bis 30.

Im Anschluss an die Polymerisation ist üblicherweise die Entfernung der nicht umgesetzten Monomere, gegebenenfalls flüchtiger Nebenprodukte, eventuell vorhandener Initiatorzerfallsprodukte und der gegebenenfalls verwendeten Lösungsmittel vorgesehen. Geeigneterweise kann man zu diesem Zweck einen oder mehrere, kontinuierlich betriebene, vorzugsweise in Reihe geschaltete Dünnschichtverdampfer einsetzen. Die abgetrennten Monomere und gegebenenfalls Lösungsmittel können dem Prozess selbstverständlich wieder zugeführt werden. Gegebenenfalls können Nebenprodukte wie Initiatorzerfallsprodukte und unerwünschte Oligomere in einem separaten Verfahrensschritt vorher abgetrennt werden.

Die nach dem erfindungsgemäßen Verfahren erhaltenen Polymere sind im Unterschied zu vernetzten Polymeren in einer Reihe von organischen Lösungsmitteln löslich, was auf ihr geringes Molekulargewicht hinweist. Geeignete Lösungsmittel für die erfindungsgemäßen Polymere sind beispielsweise Ketone wie Aceton, Methylethylketon, Cyclohexanon, aromatische Kohlenwasserstoffe wie Xylole und Toluol oder Mischungen davon, Alkohole wie Ethanol, n-Propanol, Isopropanol, n-Butanol und Isobutanol, Etheralkohole, z. B. Ethylenglykolmonomethylether, oder höhersiedende Erdölfraktionen mit Siedepunkten > 140 °C sowie Mischungen der vorgenannten Lösungsmittel.

Die erfindungsgemäß erhaltenen verzweigten Polymere unterscheiden sich von den bislang bekannten Polymeren mit vergleichbarem Molekulargewicht durch das Vorliegen von definierten Verzweigungsstellen. Der Anteil der Verzweigungsstellen hängt dabei von der Menge der eingesetzten Monomere B ab und liegt in der Regel im Bereich von 0,01 Mol bis 1 Mol und vorzugsweise im Bereich von 0,05 Mol bis 0,5 mol/kg.

Die nach dem Verfahren hergestellten teilverzweigten Polymere zeigen bei gleichem Molekulargewicht eine verbesserte Witterungsstabilität gegenüber den linearen Polymeren ähnlicher Monomerzusammensetzung.

Dadurch, dass die Verzweigung der Ketten bereits in der niedermolekularen Struktur vorgeformt wurde, können daraus mit den geeigneten Kovernetzern Makropolymere mit sehr hoher Flexibilität aufgebaut werden. Diese hohe Flexibilität ist beispielsweise bei der Beschichtung von Glasfaserkabeln (Primär-, Sekundärcoating) mittels UV-empfindlicher Lacke oder bei der Herstellung von Polyurethanschäumen wichtig.

Die erfindungsgemäß erhaltenen Polymere eignen sich, abhängig von der Art der einpolymerisierten Monomere A, beispielsweise als Bindemittel für Überzüge wie Lacke, Schutzanstriche, Druckfarben, Klebstoffen oder Papierbeschichtungsmittel sowie als Bausteine in thermisch härtbaren Beschichtungsmittelsystemen und in Polyestern und Polyurethanen. Die mit Hydroxygruppen funktionalisierten, erfindungsgemäßen Polymere finden insbesondere bei der Herstellung von Polyurethanen und besonders bevorzugt bei der Herstellung von Polyurethanschäumen auf Basis aliphatischer Isocyanate Verwendung.

Die nachfolgenden Beispiele sollen die Erfindung verdeutlichen, ohne sie jedoch einzuschränken.

### I. Analytik

Die Bestimmung der Molekulargewichte erfolgte mittels GPC unter Verwendung von Polystyrol als Standard nach DIN 55672-1. Die Polydispersität (Verhältnis von gewichtsmittlerem Molekulargewicht M_{w} zu zahlenmittlerem Molekulargewicht Mₙ) wurde hieraus errechnet.

Der Viskositätswert wurde von unverdünnten Proben der Polymere bei den angegebenen Temperaturen mit einem MC 100-Viskosimeter der Fa. Physica bestimmt.

Die OH-Zahl (mg KOH pro g Polymer) wurde durch Titration einer acetalisierten Probe mit einer 0,5 N ethanolischen KOH-Lösung bestimmt. Zuvor wurde die Säurezahl der nicht-acetalisierten Probe durch Titration ebenfalls mit 0,5 N ethanolischer KOH-Lösung ermittelt und bei der Berechnung der OH-Zahl berücksichtigt.

Der Epoxidwert [mol/kg Polymer] wurde nach Zugabe von Essigsäure durch Titration mit N-Cetyl-N,N,N-trimethylammoniumbromid bestimmt.

Die Untersuchungen zur Löslichkeit erfolgten durch Auflösung von 2 g Polymer in 1 ml des jeweiligen Lösungsmittels. Ein Polymer galt hiernach als löslich, wenn es sich innerhalb von 30 Minuten nahezu vollständig gelöst hatte.

### II. Diskontinuierliche Herstellung im Druckkessel

### Beispiel 1

In einem ölbeheizten 6 1-Druckkessel, der mit Thermometer und Druckfühler sowie zwei getrennten Zulaufdosierungen ausgerüstet war, legte man 600 ml Lösungsmittel vor und erwärmte auf 190 °C. Hierzu gab man innerhalb einer Stunde über den Zulauf 1 die Monomermischung und über den Zulauf 2 die Initiatorlösung. Nach Beendigung der Zugabe behielt man die Temperatur eine Stunde bei, kühlte dann auf 60 °C ab und verdünnte das Reaktionsgemisch mit Lösungsmittel auf einen Feststoffgehalt von etwa 50 bis 60 Gew.-%. Die Entfernung der flüchtigen Bestandteile aus der so erhaltenen Polymerlösung erfolgte in einem Dünnschichtverdampfer bei 180 °C und einem Druck von < 20 mbar.

Der Monomerzulauf enthielt 1500 g Hydroxyethylacrylat, 1350 g Ethylhexylacrylat und 150 g Hexandioldiacrylat. Als Initiatorzulauf verwendete man eine Lösung von 60 g Di-tert.-Amylperoxid in 150 g Isobutanol.

Der Feststoffgehalt des Polymeren lag bei 99,6 % und wurde durch 15-minütiges Ausheizen der Probe bei 220 °C ermittelt. Das zahlenmittlere Molekulargewicht Mₙ betrug 2362 g/mol. Die OH-Zahl des Polymeren betrug 219 mg KOH/g. Der Viskositätswert bei 30 °C war 480 Pa·s und bei 100 °C 1,9 Pa·s.

Das Polymer war in Aceton, Ethanol und Isopropanol löslich.

### Beispiel 2

Nach der Vorschrift des Beispiels 1 polymerisierte man 3 kg einer homogenen Mischung aus 50 Gew.-Teilen Hydroxyethylacrylat, 47 Gew.-Teilen Ethylhexylacrylat und 3 Gew.-Teilen Hexandiolacrylat bei 190 °C. Die Initiatorlösung enthielt 120 g Di-tert.-Amylperoxid, gelöst in 150 g Isobutanol. Der ermittelte Polymerisationsumsatz lag bei 99,4 %.

Das Molekulargewicht des erhaltenen Polymeren Mₙ lag bei 1290 g/mol. Die OH-Zahl des Polymeren betrug 213 mg KOA/g. Der Viskositätswert des Polymeren bei 30 °C betrug 36 Pa·s und bei 100 °C 1,67 Pa·s.

Das Polymer war in Aceton, Ethanol und Isopropanol löslich.

### III. Allgemeine Vorschrift für die kontinuierliche Polymerisation im Ringspalt-Reaktor

Als Polymerisationsgefäß diente ein Ringspalt-Reaktor mit einer Spaltbreite von 4 mm, einem Volumen (im Reaktionsraum) von 1,5 1, welcher mit einem Rotor (Durchmesser 96 mm) ausgerüstet war, auf dem Stege zur Förderung der Durchmischung angebracht waren. Der Reaktor wies außerdem Vorrichtungen zur Zudosierung der Monomere, zur Produktrückführung und eine Vorrichtung für die Produktentnahme auf. Die Vorrichtung zur Produktrückführung und zur Monomerzufuhr sind als Doppelrohr ausgestaltet, wobei die Monomerzufuhr über das innere Rohr und die Produktrückführung über das äußere Rohr erfolgt.

Die Polymerisation erfolgte bei einer Innentemperatur von 190 °C und einer Rotordrehzahl von 200 U/min. Der Monomerdurchsatz D betrug 13 kg/h bei einem rückgeführten Produktstrom R von 260 kg/h, entsprechend einem Rückführungsverhältnis R/D von 20. Im Anschluss an die Polymerisation wurde die Schmelze bei 180 °C in einem Dünnschichtverdampfer entgast.

### Beispiel 3

Eine Monomermischung aus 23 Gew.-Teilen Glycidylmethacrylat, 55 Gew.-Teilen Methylmethacrylat, 11 Gew.-Teilen n-Butylacrylat, 8 Gew.-Teilen Methylacrylat und 3 Gew.-Teilen Hexandiolacrylat wurden in einem Vorratsbehälter homogen vermischt. Unmittelbar von Einleiten dieser Mischung in den Ringspalt-Reaktor gab man 2 Gew.-Teile Di-tert.-Amylperoxid (als 50 gew.-%ige Lösung in Xylol) und vermischte das Ganze in einem nachgeschalteten Sulzer-Mischer. Nach Polymerisation und anschließender Entgasung wurde ein Polymer mit den folgenden Eigenschaften erhalten:
Molekulargewicht Mₙ = 1622 g/mol
Polydispersität (M_{w}/Mₙ) = 2,45
Epoxidwert = 0,1455

Das Polymer war in Xylol und Toluol löslich.

### Beispiel 4

Nach der für Beispiel 3 beschriebenen Vorgehensweise wurden 23 Gew.-Teile Glycidylmethacrylat, 55 Gew.-Teile Methylmethacrylat, 11 Gew.-Teile Butylacrylat, 5 Gew.-Teile Methylacrylat und 6 Gew.-Teile Hexandioldiacrylat polymerisiert. Nach der anschließenden Entgasung wurde ein Polymer mit den folgenden Eigenschaften erhalten:
Molekulargewicht Mₙ = 1751 g/mol
Polydispersität (M_{w}/Mₙ) = 3,98
Epoxidwert = 0,1420

Das Produkt war in Xylol und Toluol löslich.

### Beispiel 5

In einem für eine kontinuierliche Polymerisation ausgestalteten 5 1-Druckkessel mit Rührer wurde bei 190 °C und 10 bar Innendruck eine Mischung aus 50 Gew.-Teilen 2-Hydroxyethylacrylat, 47 Gew.-Teilen n-Butylacrylat und 3 Gew.-Teilen Hexandioldiacrylat in Gegenwart von 4 Gew.-Teilen Di-tert.-Amylperoxid kontinuierlich polymerisiert. Der Durchsatz (Monomermischung + Initiator) lag bei 10 kg/h. Im Anschluss an die Polymerisation wurde das entnommene Produkt bei 190 °C und einem Druck < 30 mbar in einem Dünnschichtverdampfer von flüchtigen Bestandteilen befreit.

Das Polymer wies die folgenden Eigenschaften auf:
Molekulargewicht Mₙ = 1480 g/mol
Polydispersität (M_{w}/Mₙ) = 4,46
OH-Zahl = 215 mg KOH/g

Die Viskosität einer unverdünnten Polymerprobe war 67 Pa·s bei 30 °C und 1,75 Pa·s bei 100 °C.

## Patentansprüche

1. Verfahren zur Herstellung von teilverzweigten Polymeren mit einem zahlenmittleren Molekulargewicht Mₙ im Bereich von 500 bis 10000 Dalton, aufgebaut aus ethylenisch ungesättigten Monomeren, umfassend:
i) 90 bis 99 Gew.-% monoethylenisch ungesättigte Monomere A und
ii) 1 bis 10 Gew.-% Monomere B, die wenigstens zwei nichtkonjugierte, ethylenisch ungesättigte Doppelbindungen aufweisen,
wobei der Gewichtsanteil der Monomere A und B auf die Gesamtmenge der das Polymer konstituierenden ethylenisch ungesättigten Monomere bezogen ist, durch radikalische Copolymerisation der Monomere A und B in Gegenwart von 1 bis 6 Gew.-%, bezogen auf das Gesamtgewicht der Monomere A und B, wenigstens eines Polymerisationsinitiators in Substanz oder in Lösung bei Temperaturen im Bereich von 170 °C bis 250 °C.

2. Verfahren nach Anspruch 1, worin die Monomere A wenigstens ein Monomer A1 mit wenigstens einer Reaktiv-Gruppe und wenigstens eine Monomer A2 ohne Reaktiv-Gruppe umfassen.

3. Verfahren nach Anspruch 2, worin die Monomere A1 ausgewählt sind unter OH-Gruppen tragenden Estern der Acrylsäure und der Methacrylsäure.

4. Verfahren nach Anspruch 2 oder 3, worin der Anteil der Monomere A1 an der Gesamtmenge der das Polymer konstituierenden Monomere 10 bis 80 Gew.-% beträgt.

5. Verfahren nach einem der vorhergehenden Ansprüche, worin die Monomere B ausgewählt sind unter den wenigstens zweifach mit Acrylsäure oder Methacrylsäure veresterten Di- oder Polyolen.

6. Verfahren nach einem der vorhergehenden Ansprüche, wobei man die Polymerisation in Abwesenheit eines Polymerisationsreglers durchführt.

7. Verfahren nach einem der vorhergehenden Ansprüche, wobei der Polymerisationsinitiator ausgewählt ist unter Peroxiden und Hydroperoxiden.

8. Verfahren nach einem der vorhergehenden Ansprüche, wobei man die zu polymerisierenden Monomere kontinuierlich der Polymerisationszone zuführt und das gebildete Polymer kontinuierlich aus der Polymerisationszone abführt.

9. Verfahren zur Herstellung von teilverzweigten Polymeren mit einem zahlenmittleren Molekulargewicht Mₙ im Bereich von 500 bis 10000 Dalton, aufgebaut aus ethylenisch ungesättigten Monomeren, umfassend:
i) 90 bis 99 Gew.-% monoethylenisch ungesättigte Monomere A, umfassend, jeweils bezogen auf die Gesamtmenge der Monomere A, 10 bis 79 Gew.-% Monomere A1, ausgewählt unter unter OH-Gruppen tragenden Estern der Acrylsäure und der Methacrylsäure und 20 bis 89 Gew.-% Monomeren A2, ausgewählt unter C₁-C₂₀-Alkylacrylaten, C₅-C₁₀-Cycloalkylacrylaten, C₁-C₂₀-Alkylmethacrylaten und C₅-C₁₀-Cycloalkylmethacrylaten,
ii) 1 bis 10 Gew.-% Monomere B, die wenigstens zwei nichtkonjugierte, ethylenisch ungesättigte Doppelbindungen aufweisen, ausgewählt unter den wenigstens zweifach mit Acrylsäure oder Methacrylsäure veresterten Di- oder Polyolen
wobei der Gewichtsanteil der Monomere A, A1, A2 und B auf die Gesamtmenge der das Polymer konstituierenden ethylenisch ungesättigten Monomere bezogen ist, durch radikalische Copolymerisation der Monomere A und B in Gegenwart von 1 bis 6 Gew.-%, bezogen auf das Gesamtgewicht der Monomere A und B, wenigstens eines Polymerisationsinitiators in Substanz oder in Lösung bei Temperaturen im Bereich von 170 °C bis 250 °C.

10. Verfahren nach Anspruch 9, wobei man die Polymerisation in Abwesenheit eines Polymerisationsreglers durchführt.

11. Verfahren nach Anspruch 9 oder 10, wobei man die zu polymerisierenden Monomere kontinuierlich der Polymerisationszone zuführt und das gebildete Polymer kontinuierlich aus der Polymerisationszone abführt.

## Claims

1. A process for preparing partially branched polymers having a number-average molecular weight Mₙ in the range from 500 to 10 000 daltons and synthesized from ethylenically unsaturated monomers including:
i) from 90 to 99.9% by weight of monoethylenically unsaturated monomers A, and
ii) from 1 to 10% by weight of monomers B containing at least two nonconjugated ethylenically unsaturated double bonds,
the weight fraction of the monomers A and B being based on the total amount of the ethylenically unsaturated monomers that constitute the polymer, by free-radically copolymerizing monomers A and B in the presence of from 1 to 6% by weight, based on the overall weight of monomers A and B, of at least one polymerization initiator in bulk or in solution at temperatures in the range from 170°C to 250°C.

2. A process as claimed in claim 1, wherein the monomers A include at least one monomer A1 containing at least one reactive group and at least one monomer A2 without a reactive group.

3. A process as claimed in claim 2, wherein the monomers A1 are selected from esters of acrylic acid and of methacrylic acid that carry OH groups.

4. A process as claimed in claim 2 or 3, wherein the proportion of the monomers A1 among the overall amount of the monomers that constitute the polymer is from 10 to 80% by weight.

5. A process as claimed in any of the preceding claims, wherein the monomers B are selected from diols or polyols esterified at least doubly with acrylic acid or methacrylic acid.

6. A process as claimed in any of the preceding claims, wherein the polymerization is conducted in the absence of a polymerization regulator.

7. A process as claimed in any of the preceding claims, wherein the polymerization initiator is selected from peroxides and hydroperoxides.

8. A process as claimed in any of the preceding claims, wherein the monomers to be polymerized are supplied continuously to the polymerization zone and the polymer formed is taken off continuously from the polymerization zone.

9. A process for preparing partially branched polymers having a number-average molecular weight Mₙ in the range from 500 to 10 000 daltons and synthesized from ethylenically unsaturated monomers including:
i) from 90 to 99.9% by weight of monoethylenically unsaturated monomers A including, based in each case on the total amount of the monomers A, from 10 to 79% by weight of monomers A1 selected from OH-bearing esters of acrylic acid and of methacrylic acid and from 20 to 89% by weight of monomers A2 selected from C₁-C₂₀ alkyl acrylates, C₅-C₁₀ cycloalkyl acrylates, C₁-C₂₀ alkyl methacrylates and C₅-C₁₀ cycloalkyl methacrylates,
ii) from 1 to 10% by weight of monomers B containing at least two nonconjugated ethylenically unsaturated double bonds, selected from diols or polyols that have been at least doubly esterified with acrylic acid or methacrylic acid,
the weight fraction of the monomers A, A1, A2 and B being based on the total amount of the ethylenically unsaturated monomers that constitute the polymer, by free-radically copolymerizing monomers A and B in the presence of from 1 to 6% by weight, based on the overall weight of monomers A and B, of at least one polymerization initiator in bulk or in solution at temperatures in the range from 170°C to 250°C.

10. A process as claimed in claim 9, wherein the polymerization is conducted in the absence of a polymerization regulator.

11. A process as claimed in claim 9 or 10, wherein the monomers to be polymerized are supplied continuously to the polymerization zone and the polymer formed is taken off continuously from the polymerization zone.

## Revendications

1. Procédé de préparation de polymères partiellement ramifiés avec un poids moléculaire moyen Mₙ de 500 à 10000 daltons, formés à partir de monomères éthyléniques insaturés, comprenant :
i) 90 à 99 % en poids de monomères A monoéthyléniques insaturés,
ii) 1 à 10 % en poids de monomères B comportant au moins deux doubles liaisons éthyléniques insaturées non conjuguées,
la proportion pondérale des monomères A et B étant rapportée à la quantité totale des monomères éthyléniques insaturés constituant le polymère, par copolymérisation radicalaire des monomères A et B en présence de 1 à 6 % en poids, par rapport au poids total des monomères A et B, d'au moins un initiateur de polymérisation en substance ou en solution à des températures de 170°C à 250°C.

2. Procédé selon la revendication 1, dans lequel les monomères A comprennent au moins un monomère A1 avec au moins un groupe réactif et au moins un monomère A2 sans groupe réactif.

3. Procédé selon la revendication 2, dans lequel les monomères A1 sont choisis parmi des esters de l'acide acrylique et de l'acide méthacrylique portant des groupes OH.

4. Procédé selon la revendication 2 ou 3, dans lequel la proportion de monomères A1 est de 10 à 50 % en poids de la quantité totale de monomères constituant le polymère.

5. Procédé selon l'une des revendications précédentes, dans lequel les monomères B sont choisis parmi les diols ou polyols estérifiés au moins deux fois avec de l'acide acrylique ou de l'acide méthacrylique.

6. Procédé selon l'une des revendications précédentes, la polymérisation étant réalisée en l'absence d'un régulateur de polymérisation.

7. Procédé selon l'une des revendications précédentes, l'initiateur de polymérisation étant choisi parmi les peroxydes et hydroperoxydes.

8. Procédé selon l'une des revendications précédentes, les monomères à polymériser étant admis de façon continue dans la zone de polymérisation et le polymère formé étant extrait de façon continue de la zone de polymérisation.

9. Procédé de préparation de polymères partiellement ramifiés avec un poids moléculaire moyen Mₙ de 500 à 10000 daltons, formés à partir de monomères éthyléniques insaturés, comprenant :
i) 90 à 99 % en poids de monomères A monoéthyléniques insaturés, comprenant, chacun par rapport à la quantité totale de monomères A, 10 à 79 % en poids de monomères A1 choisis parmi des esters de l'acide acrylique ou de l'acide méthacrylique portant des groupes OH et 20 à 89 % en poids de monomères A2 choisis parmi des acrylates d'alkyles en C₁ à C₂₀, des acrylates de cycloalkyles en C₅ à C₁₀, des méthacrylates d'alkyles en C₁ à C₂₀ et des méthacrylates de cycloalkyles en C₅ à C₁₀.
ii) 1 à 10 % en poids de monomères B qui comportent au moins deux doubles liaisons éthyléniques insaturées non conjuguées, choisis parmi les diols ou polyols estérifiés au moins deux fois avec de l'acide acrylique ou de l'acide méthacrylique,
la proportion pondérale des monomères A, A1, A2 et B étant rapportée à la quantité totale des monomères éthyléniques insaturés constituant le polymère, par copolymérisation radicalaire des monomères A et B en présence de 1 à 6 % en poids, par rapport au poids total des monomères A et B, d'au moins un initiateur de polymérisation en substance ou en solution à des températures de 170°C à 250°C.

10. Procédé selon la revendication 9, la polymérisation étant réalisée en l'absence d'un régulateur de polymérisation.

11. Procédé selon la revendication 9 ou 10, les monomères à polymériser étant admis de façon continue dans la zone de polymérisation et le polymère formé étant extrait de façon continue de la zone de polymérisation.
